# EUROPÄISCHE PATENTANMELDUNG

(11) **EP 2 378 138 A1**
(43) Veröffentlichungstag der Anmeldung: **19.10.2011**
(21) Anmeldenummer: 11157788.8
(22) Anmeldetag: 11.03.2011
(51) Int. Cl.: F16B 2/04, F16B 5/06, F24J 2/52

(54) **Befestigungsvorrichtung für Anbauteile an Montageschienen**

(30) Priorität: 19.04.2010 DE 102010027904
(71) Anmelder: HILTI Aktiengesellschaft, 9494 Schaan (LI)
(72) Erfinder: Ostermeier, Peter, 86911, Diessen (DE); Hermann, Fritz, 86899, Landsberg (DE); Burtscher, Norbert, 6712, Thüringen (AT)

(57) **Zusammenfassung**

Bei einer Vorrichtung (1) zum Befestigen eines Anbauteiles (3) an einem Trägerteil (5), umfassend wenigstens ein bewegbares Halteelement (16), welches oder welche beim Einführen in eine Öffnung (10) des Trägerteiles (5) aufgrund eines Kontaktes zwischen dem wenigstens einen Halteelement (16) und dem Trägerteil (5) in eine Eingreifstellung bewegbar ist zum Einführen in die Öffnung und mittels einer Rückbewegung des wenigstens einen Halteelementes (16) nach dem Einführen in die Öffnung in eine Hintergreifstellung bewegbar ist, so dass wenigstens ein Rand des Trägerteils (5) von dem wenigstens einen Halteelement (16) hintergreifbar ist für eine formschlüssige Verbindung zwischen dem wenigstens einen Halteelement (16) und dem Trägerteil (5), wenigstens ein Mittel (12) zur Fixierung des Anbauteiles (3) an der Vorrichtung (1), sollen Anbauteile (3) an dem Trägerteil (5) ohne Werkzeuge mit einem einfachen technischen Aufbau mittels der Vorrichtung (1) befestigt werden können. Diese Aufgabe wird dadurch gelöst, dass das wenigstens eine Halteelement (16) mittels wenigstens einen elastischen Elementes (8) von der Eingreifstellung in die Hintergreifstellung bewegbar ist.

## Beschreibung

Die vorliegende Erfindung betrifft eine Vorrichtung zum Befestigen eines Anbauteiles an einem Trägerteil gemäß dem Oberbegriff des Anspruches 1 und ein System zum Befestigen eines Anbauteiles an einem Trägerteil gemäß dem Oberbegriff des Anspruches 11.

In der Bautechnik werden Vorrichtungen zum Befestigen eines Anbauteils an einem Trägerteil verwendet, um Anbauteile an dem Trägerteil zu befestigen. Als Anbauteile kommen beispielsweise Fotovoltaik-Module, Fassadenelemente oder Leitungen als Bestandteil einer Wasserheizungsoder Elektroinstallation in Betracht. Als Trägerteile werden im Allgemeinen Trag- oder Montageschienen verwendet.

Die DE 103 13 564 A1 zeigt ein Verbindungselement für Bauteile. Die Bauteile sind mit länglichen Ausnehmungen versehen, die zur Aufnahme des Verbindungselementes miteinander ausgerichtet werden, wobei das Verbindungselement als einteiliger Federclip ausgebildet ist, der diametral abstehende Federarme aufweist, deren Breite zum Einführen in die länglichen Ausnehmungen ausgelegt ist, wobei den freien Enden der Federarme in einem axialen Abstand jeweils ein Widerlagerabschnitt gegenüberliegt, der an dem Federclip angeformt ist und einen Eingriffabschnitt für ein Montagewerkzeug aufweist.

Aus der DE 10 2006 011 836 B3 ist ein Befestigungselement mit einer Grundplatte bekannt. Von der Grundplatte erstrecken sich gegenüberliegend erste Arme, die jeweils einen ersten Anlageabschnitt mit einem ersten Abstand zur Grundplatte aufweisen und wenigstens zwei sich gegenüberliegende zweite Arme, die einen zweiten Anlageabschnitt mit einem zweiten Abstand zur Grundplatte aufweisen. Die ersten Arme weisen dabei Betätigungsabschnitte auf, welche jeweils als eine Öse aufweisende Fläche ausgebildet sind.

Die DE 10 2007 042 484 B3 zeigt eine Vorrichtung zum Befestigen eines Anbauteils an einem Trägerteil mit einem zur Auflage an dem Anbauteil oder dem Trägerteil bestimmten Kopfteil, das über seitlich überstehende Auflageabschnitte verfügt. Eine federnde Vorderwandanordnung weist zwei Sperrflügel auf, die in etwa rechtwinklig zu der Vorderwand ausgerichtet sind. Die Sperrflügel weisen Raststufen auf, welche in einer Hintergreifstellung der Vorrichtung an dem Trägerteil aufliegen.

Aus der DE 20 2005 003 224 U1 ist ein Einsetzteil zur Halterung eines Nutensteins in einer hinterschnittenen Profilnut einer Profilleiste bekannt. Das Einsetzteil weist im eingesetzten Zustand dieselbe zu einer Leistenachse der Profilleiste im Wesentlichen parallele Längsachse auf, wobei das Einsetzteil einen Sitz für den Nutenstein mit axial gegenüberliegenden Sitzbegrenzungsflächen, zwischen denen der Nutenstein aufnehmbar ist, sowie zwischen den Sitzbegrenzungsflächen angeordneten Auflagerflächen zur Auflagerung des Nutensteines aufweist. Dabei weist das Einsetzteil erste Stützflächen auf, welche im eingesetzten Zustand des Einsetzteils eine Abstützung desselben an Hinterschneidungsflächen der Profilnut gestatten, wobei wenigstens ein Teil der ersten Stützflächen derart flexibel auslenkbar angeordnet ist, dass das Einsetzteil durch die Nutöffnung der Profilnut hindurch in diese einsetzbar ist.

Die DE 20 2006 018 426 U1 zeigt ein Montageschienensystem zur Halterung von Gegenständen, insbesondere Flächenkörpern, wie Solarmodule oder Solarkollektoren, wobei mindestens ein schienenartiges Profil mit mindestens zwei in Längsrichtung des schienenartigen Profils verlaufende Profilleisten und mindestens ein federelastisches Klammerelement zur Befestigung des schienenartigen Profils auf einen Untergrund und/oder zur Halterung von Gegenständen am schienenartigen Profil mit mindestens zwei sich gegenüberstehenden, aneinander gegenüberliegenden Seiten des schienenartigen Profils angreifenden Federschenkeln, die mit jeweils einer der Profilleisten so zusammenwirken, dass das federelastische Klammerelement am schienenartigen Profil federelastisch fixierbar ist.

Die Aufgabe der vorliegenden Erfindung besteht darin, eine Vorrichtung und ein System zur Verfügung zu stellen, bei dem Anbauteile an einem Trägerteil ohne Werkzeuge mit einem einfachen technischen Aufbau mittels der Vorrichtung und dem System befestigt werden können. Des Weiteren soll die Vorrichtung und das System in der Herstellung preiswert sein und eine einfache und zuverlässige Handhabung ermöglichen.

Diese Aufgabe wird gelöst mit einer Vorrichtung zum Befestigen eines Anbauteiles an einem Trägerteil, umfassend wenigstens ein bewegbares, vorzugsweise um eine Drehachse verschwenkbares, Halteelement, welches oder welche beim Einführen in eine Öffnung des Trägerteiles aufgrund eines Kontaktes zwischen dem wenigstens einen Halteelement und dem Trägerteil in eine Eingreifstellung bewegbar ist zum Einführen in die Öffnung und mittels einer Rückbewegung des wenigstens einen Halteelementes nach dem Einführen in die Öffnung in eine Hintergreifstellung bewegbar ist, so dass wenigstens ein Rand des Trägerteils von dem wenigstens einen Halteelement hintergreifbar ist für eine formschlüssige Verbindung zwischen dem wenigstens einen Halteelement und dem Trägerteil und wenigstens ein Mittel zur Fixierung des Anbauteiles an der Vorrichtung, wobei das wenigstens eine Halteelement mittels wenigstens einen elastischen Elementes von der Eingreifstellung in die Hintergreifstellung bewegbar ist und/oder in einer Klemmbewegung bewegbar ist.

In einer weiteren Ausgestaltung sind das wenigstens eine Halteelement und das wenigstens eine elastische Element getrennte Bauteile. Das wenigstens eine Halteelement und das wenigstens eine elastische Element sind somit getrennte Bauteile, die vorzugsweise lösbar miteinander verbunden sind. Erst bei der Montage der Vorrichtung wird das wenigstens eine Halteelement mit dem wenigstens einen elastischen Element, beispielsweise form-und/oder kraftschlüssig, miteinander verbunden.

In einer Variante umfasst die Vorrichtung wenigstens zwei Halteelemente und/oder das wenigstens eine Halteelement ist in der Hintergreifstellung wenigstens teilweise, insbesondere vollständig, in einem von dem Trägerteil eingeschlossenen Innenraum angeordnet und/oder je zwei Halteelemente gegenüberliegend angeordnet und/oder eine kraftschlüssige Verbindung zwischen dem wenigstens einen Halteelement und dem Trägerteil herstellbar ist.

In einer zusätzlichen Ausgestaltung umfasst das wenigstens eine Mittel eine Trägerplatte oder ein Gitter zur, vorzugsweise unmittelbaren, Fixierung der Vorrichtung an dem Anbauteil.

In einer ergänzenden Variante ist das wenigsten eine Halteelement eine, vorzugsweise um eine Drehachse verschwenkbar, Klemmbacke.

Zweckmäßig umfasst die Vorrichtung einen in die Öffnung einführbaren Steg und an dem Steg ist das wenigstens eine Halteelement, vorzugsweise mittels eines Gelenkes, verschwenkbar gelagert.

In einer ergänzenden Ausführungsform ist der Steg an der Trägerplatte, vorzugsweise einstückig, ausgebildet und/oder es steht eine von dem Steg aufgespannte Ebene im Wesentlichen, z. B. mit einer Abweichung von weniger als 10° oder 5°, senkrecht zu einer von der Trägerplatte aufgespannten Ebene.

Insbesondere ist eine Kontaktfläche des wenigstens einen Halteelementes an dem Trägerteil gekrümmt, insbesondere in einem Schnitt senkrecht zu der Drehachse des wenigstens einen Halteelementes im Wesentlichen als ein Kontaktflächen-Kreisbogen, ausgebildet.

In einer zusätzlichen Ausgestaltung ist der wenigstens eine von dem wenigstens einen Trägerteil hintergreifbare Rand des Trägerteils gekrümmt, insbesondere in einem Schnitt senkrecht zu einer Drehachse des wenigstens einen Halteelementes im Wesentlichen als ein Rand-Kreisbogen, ausgebildet.

In einer ergänzenden Ausgestaltung sind der Mittelpunkt des Kontaktflächen-Kreisbogens und/oder der Mittelpunkt des Rand-Kreisbogens und/oder die Drehachse des wenigstens einen Halteelementes dahingehend zueinander ausgerichtet, dass sich bei einer Klemmbewegung des wenigstens einen Halteelementes der Abstand zwischen dem Rand des Trägerteiles und der Kontaktfläche des wenigstens einen Halteelementes verringert und/oder das wenigstens eine elastische Elemente als Feder, insbesondere Drahtfeder, ausgebildet ist. Die Klemmbewegung ist vorzugsweise eine Bewegung des wenigstens einen Halteelementes in einer Richtung von einer Vormontagestellung in die Eingreifstellung oder in Richtung der Rückbewegung.

In einer weiteren Ausgestaltung besteht das Trägerteil und/oder die Vorrichtung und/oder die Trägerplatte und/oder der Steg und/oder das wenigstens eine Halteelement und/oder das wenigstens eine elastische Element wenigstens teilweise, insbesondere vollständig aus Metall, zum Beispiel Aluminium oder Stahl oder Edelstahl und/oder aus Kunststoff.

In einer ergänzenden Ausgestaltung besteht zwischen der Vorrichtung und dem Trägerteil eine form- und/oder kraftschlüssige Verbindung und/oder es besteht zwischen dem Trägerteil und der Vorrichtung eine Klemmverbindung und/oder eine Verbindung mit einem Keil- bzw. Exzentereffekt.

In einer weiteren Ausgestaltung ist die Vorrichtung mittels eines Schnappund/oder Einrastmechanismus an dem Trägerteil befestigbar.

In einer ergänzenden Ausgestaltung ist das wenigstens eine bewegbare Halteelement in einer Vormontagestellung nicht vorgespannt. Die Vormontagestellung des wenigstens einen bewegbaren Halteelementes liegt vor, wenn die Vorrichtung nicht an dem Trägerteil montiert ist und sich das wenigstens eine Halteelement nicht in der Eingreifstellung und/oder der Hintergreifstellung befindet.

Vorzugsweise ist das wenigstens eine Halteelement, insbesondere ausschließlich, im Wesentlichen platten- oder scheibenförmig ausgebildet. Das wenigstens eine Halteelement ist damit einfach und preiswert in der Herstellung und ermöglicht eine zuverlässige formschlüssige Verbindung zwischen der Vorrichtung und dem Trägerteil.

In einer weiteren Ausgestaltung umfasst das wenigstens eine Mittel eine Klebe-, Rast-, Niet- und/oder Schraubverbindung zur Fixierung des Anbauteiles an der Vorrichtung, insbesondere der Trägerplatte.

In einer weiteren Ausgestaltung weist das wenigstens eine elastische Halteelement im Wesentlichen keine elastischen Eigenschaften auf und/oder das wenigstens eine Halteelement ist starr und/oder fest und/oder im Wesentlichen unverformbar, z. B. aufgrund der Eigenschaften des Materials aus dem es besteht und/oder der Materialdicke.

Erfindungsgemäßes System zum Befestigen eines Anbauteiles an einem Trägerteil, umfassend eine Vorrichtung zum Befestigen des Anbauteiles an dem Trägerteil, umfassend wenigstens ein Halteelement zum Einführen in eine Öffnung des Trägerteiles und zum Hintergreifen wenigstens eines Randes des Trägerteiles mit wenigstens einem bewegbaren Halteelement, welches oder welche beim Einführen in die Öffnung aufgrund eines Kontaktes zwischen dem wenigstens einen Halteelement und dem Trägerteil in eine Eingreifstellung bewegbar ist zum Einführen in die Öffnung und mittels einer Rückbewegung des wenigstens einen Halteelementes nach dem Einführen in die Öffnung in eine Hintergreifstellung bewegbar ist, so dass der wenigstens eine Rand des Trägerteils von dem wenigstens einen Halteelement hintergreifbar ist für eine formschlüssige Verbindung zwischen dem wenigstens einen Halteelement und dem Trägerteil, weiterhin umfassend wenigstens ein Mittel zur Fixierung des Anbauteiles an der Vorrichtung, weiterhin umfassend das Trägerteil, wobei die Vorrichtung als eine in dieser Schutzrechtsanmeldung beschriebene Vorrichtung ausgebildet ist.

In einer weiteren Ausgestaltung ist das Trägerteil eine Tragschiene und/oder die Öffnung ist eine Nut und/oder die Öffnung mündet in einen von einer Innenkontur des Trägerteils begrenzten Innenraum, so dass der wenigstens eine Rand zum Hintergreifen mit dem wenigstens einen Haltelement von der Innenkontur des Trägerteils gebildet ist.

In einer ergänzenden Ausgestaltung ist die Öffnung eine Montageöffnung zur Befestigung der Vorrichtung an dem Trägerteil.

In einer ergänzenden Variante sind zwei gegenüberliegende Halteelemente bei einer Befestigung der Vorrichtung an dem Trägerteil bezüglich einer durch eine zentrische Schienenlängsachse der Tragschiene verlaufenden Ebene dahingehend ausgerichtet, dass die Ebene durch die beiden Halteelemente verläuft und die Ebene von der zentrischen Schienenlängsachse in eine erste Teilebene und eine zweite Teilebene unterteilt ist und ein erstes Halteelement von der ersten Teilebene geschnitten ist und ein zweites Halteelemente von der zweiten Teilebene geschnitten ist. Die zentrische Schienenlängsachse ist in Richtung der größten Ausdehnung der Tragschiene ausgerichtet und schneidet vorzugsweise einen Mittelpunkt oder einen Schwerpunkt der Tragschiene. Die Schienenlängsachse kann auch parallel verschoben werden, so dass die Schienenlängsachse nicht den Schwerpunkt schneidet.

In einer weiteren Variante ist der Abstand von Enden zweier gegenüberliegender Halteelemente in einer Abstandsrichtung vor dem Einführen in die Öffnung größer als eine lichte Breite der Öffnung in der Abstandsrichtung, so dass beim Einführen der zwei gegenüberliegenden Haltelemente die Halteelemente wegen eines Kontaktes mit dem Trägerteil bewegbar sind, insbesondere dahingehend, dass der maximale Abstand verkleinert wird.

In einer weiteren Ausgestaltung ist bei einer Befestigung der Vorrichtung an dem Trägerteil das elastische Element vorgespannt und damit eine Vorspannkraft auf das wenigstens eine Halteelement aufbringbar, so dass aufgrund der Vorspannung von dem wenigstens einen Halteelement eine Klemmbewegung ausführbar ist.

Im Nachfolgenden werden Ausführungsbeispiele der Erfindung unter Bezugnahme auf die beigefügten Zeichnungen näher beschrieben. Es zeigt:
- Fig. 1: einen erste perspektivische Ansicht eines Systems zum Befestigen eines Anbauteiles mit einem Trägerteil und einer Vorrichtung,
- Fig. 2: einen Querschnitt des Systems gemäß Fig. 1 in einem Vormontagezustand,
- Fig. 3: einen Querschnitt des Systems gemäß Fig. 1 in einem Endmontagezustand,
- Fig. 4: einen Querschnitt einer Trägerplatte mit einem Steg und zweier Halteelemente des Systems gemäß Fig. 1,
- Fig. 5: eine perspektivische Ansicht einer Drahtfeder in einem ersten Ausführungsbeispiel,
- Fig. 6: eine perspektivische Ansicht der Drahtfeder in einem zweiten Ausführungsbeispiel,
- Fig. 7: eine Detailansicht des Trägerteils und der Vorrichtung gemäß Fig. 3.

In der Bautechnik bzw. im Bauwesen werden Vorrichtungen 1 zum Befestigen eines Anbauteiles 3 an einem Trägerteil 5 genutzt. Das Anbauteil 3 ist dabei beispielsweise ein Fotovoltaik-Modul 4, ein Fassadenelement oder eine Leitung (nicht dargestellt) und das Trägerteil 5 eine Tragschiene 6 oder eine Montageschiene 7. Mit der Vorrichtung 1 kann damit mittelbar das Anbauteil 3 an dem Trägerteil 5 befestigt werden.

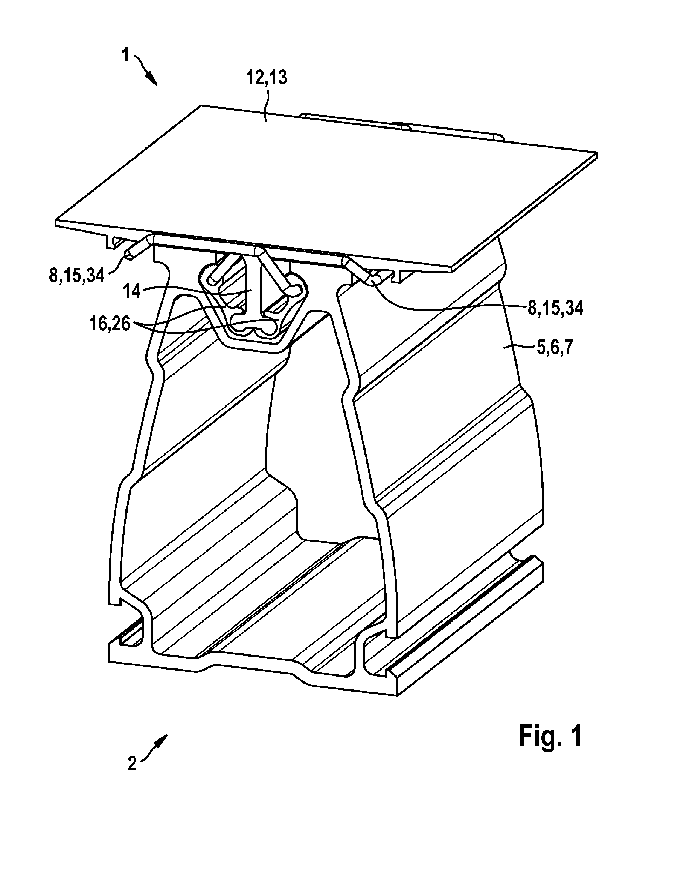

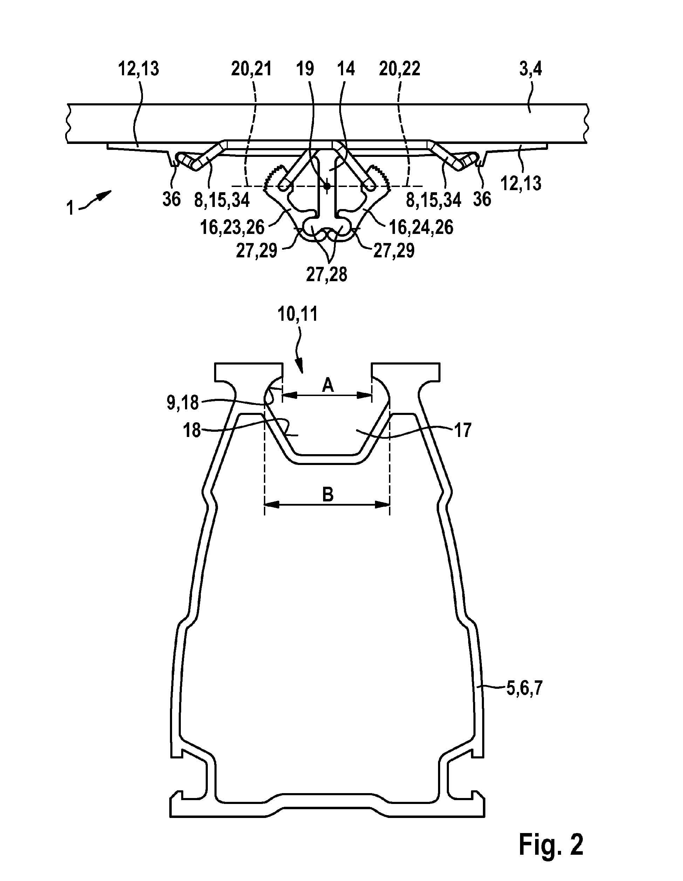

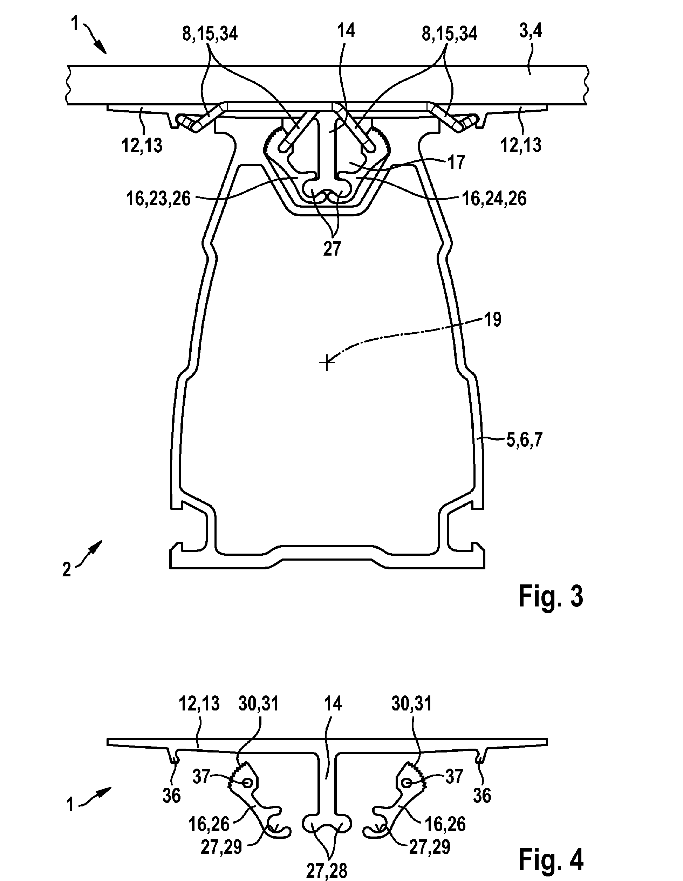

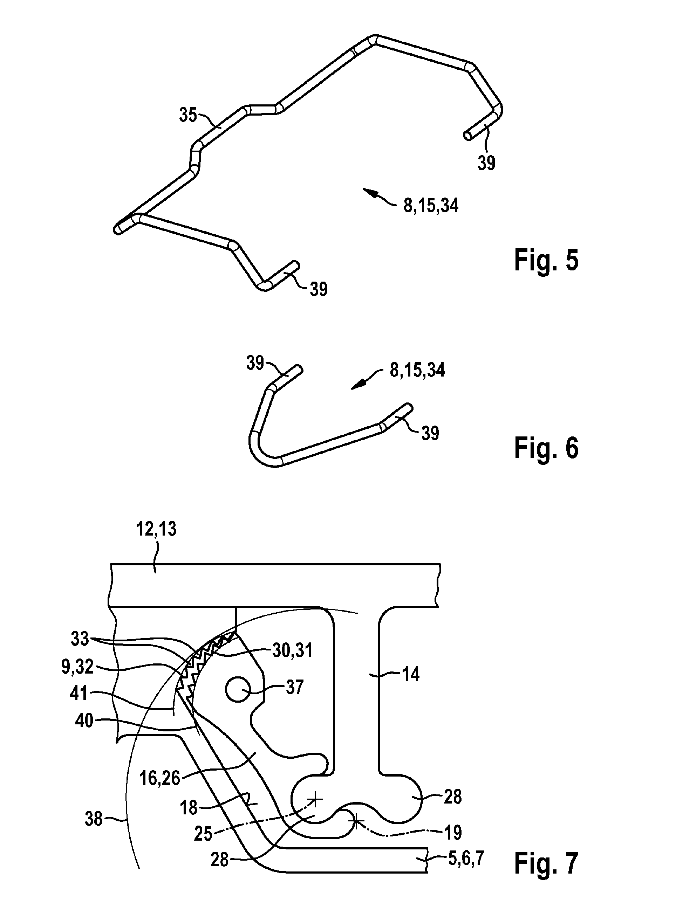

Die Vorrichtung 1 umfasst dabei eine Trägerplatte 13 als Mittel 12 zur Fixierung des Anbauteiles 3 an der Vorrichtung 1 und zwei bewegbare Halteelement 16 (Fig. 1, 2 und 3). Die Trägerplatte 13 ist mit dem Anbauteil 3 stoffschlüssig, beispielsweise mittels Kleben oder Schweißen, oder formschlüssig, beispielsweise mit nicht dargestellten Schrauben oder Nieten zur Herstellung einer Schraub- oder Nietverbindung, verbunden (nicht dargestellt). An der Trägerplatte 13 ist einstückig mit der Trägerplatte 13 ein Steg 14 vorhanden (Fig. 1 bis 4). Das untere Ende des Steges 14 ist mit zwei Gelenkkugeln 28 versehen. Mit jeder der Gelenkkugeln 28 ist formschlüssig ein Gelenktopf 29 des Halteelementes 16 verbunden. Die Gelenkkugel 28 und der Gelenktopf 29 bilden damit ein Gelenk 27, so dass das Halteelement 16 als Klemmbacken 26 um eine Drehachse 25 verschwenbar ist (Fig. 2, 3 und 7). Die Drehachse 25 steht dabei senkrecht zu der Zeichenebene der Fig. 2, 3 und 7. Jeder der beiden Klemmbacken 26 weist eine Bohrung 37 auf. Bei jeder der beiden Klemmbacken 26 ist in beide Enden der Bohrungen 37 ein Endabschnitt 39 je einer Drahtfeder 34 als Feder 15, welche ein elastisches Element 8 bildet, eingeschoben bei einer Ausbildung der Drahtfeder 34 in dem ersten Ausführungsbeispiel gemäß Fig. 5. Die Drahtfedern 34 und die Halteelemente 16 sind separate und getrennte Bauteile. Die Vorrichtung 1 weist somit zwei Drahtfedern 34 auf, die jeweils mit dem Endabschnitt 39 in die beiden Enden der Bohrungen 37 je einer Klemmbacke 26 eingeschoben sind. Eine Abkröpfung 35 der Drahtfeder 34 ist mit einem Raststeg 36 an der Trägerplatte 13 mittels Einrasten verbunden. Die Rastverbindung zwischen dem Raststeg 36 und der Abkröpfung 35 der Drahtfeder 34 kann mit einem Schraubendreher gelöst werden und anschließend die Drahtfeder 34 quer zu der Schienenlängsachse 19 herausgezogen werden kann, nachdem die Endabschnitt 39 aus den Bohrungen 37 herausgenommen worden sind. Dadurch können die Klemmbacken 26 aus der Hintergreifstellung heraus bewegt werden damit die Vorrichtung 1 mit dem Anbauteil 3 von der Tragschiene 1 entfernt werden. Es handelt sich somit um eine lösbare Verbindung zwischen der Vorrichtung 1 und dem Trägerteil 5. Die Trägerplatte 13 weist zwei einstückig mit der Trägerplatte 13 ausgebildete Raststege 36 auf. Jeder der beiden Klemmbacken 26 mit jeweils einer Drahtfeder 34 verbunden, so dass die Vorrichtung 1 zwei Drahtfedern 34 aufweist. Die Klemmbacken 26 weisen eine Kontaktfläche 30 auf, welche auf der Tragschiene 6, d. h. einem Rand 9 der Tragschiene 6, aufliegt (Fig. 1 und 3).

Die Montageschiene 7 weist eine Öffnung 10 als Montageöffnung auf, die als Nut 11 ausgebildet ist. Die Nut 11 erstreckt sich dabei mit ihrer größeren Ausdehnung in Richtung einer Schienenlängsachse 19. Die Montageschiene 7 umschließt dabei mit einer Innenkontur 18 einen Innenraum 17, in welchen die Öffnung 10 mündet. Eine lichte Breite A der Öffnung 10 ist dabei in einer Ausrichtung parallel zu der Zeichenebene von Fig. 2 kleiner als eine lichte Breite B des Innenraumes 17 im Anschluss an die Öffnung 10 (Fig. 2). Die aus Metall, beispielsweise Aluminium oder Stahl, oder Kunststoff bestehende Montageschiene 7 bildet dabei zusammen mit der Vorrichtung 1 aus dem gleichen Material ein System 2 zum Befestigen des Anbauteiles 3 mit dem Trägerteil 5.

In dem in Fig. 2 dargestellten Ausführungsbeispiel der Vorrichtung 1 sind zwei Halteelemente 16 gegenüberliegend bezüglich einer zentrischen Schienenlängsachse 19 ausgerichtet. Eine Ebene 20, welche die Schienenlängsachse 19 schneidet und parallel zu einer von der Trägerplatte 13 aufgespannten Ebene ausgerichtet ist und welche die beiden Halteelemente 16 schneidet, ist dabei von der Schienenlängsachse 19 in eine erste Teilebene 21 und eine zweite Teilebene 22 unterteilt. Die erste Teilebene 21 schneidet dabei das erste Halteelement 23 und die zweite Teilebene 22 schneidet das zweite Halteelement 24.

In Fig. 2 ist ein Vormontagezustand dargestellt, in welchem sich die Halteelemente 16 in einer Vormontagestellung befinden. In der Vormontagestellung sind die elastischen Elemente 8 nicht vorgespannt. Die Bewegbarkeit der Halteelemente 16 ist aufgrund einer elastischen Verformung der Drahtfeder 34.

In dem in Fig. 2 dargestellten Vormontagezustand sind der Abstand zwischen den Enden der Halteelemente 16 in einer Richtung parallel zu einer von der Trägerplatte 13 aufgespannten Ebene und parallel zu der Zeichenebene von Fig. 2 (Abstandsrichtung) größer als die lichte Breite A der Öffnung 10 bzw. Montageöffnung 10. Beim Einführen und Bewegen der Vorrichtung 1 in die Öffnung 10 und den Innenraum 17 werden aufgrund der keilförmigen Ausrichtung der beiden Halteelemente 16 die Halteelemente 16 um die Drehachse 25 verschwenkt, so dass sich das in Fig. 2 dargestellte rechte Halteelement 16 in einer Drehrichtung entgegen dem Uhrzeigersinn um die Drehachse 25 verschwenkt und das linke Halteelement 16 in einer Drehrichtung um die Drehachse 25 im Uhrzeigersinn bewegt. Dadurch werden die beiden Halteelemente 16 von der Vormontagestellung in eine Eingreifstellung (nicht dargestellt) bewegt. In der Eingreifstellung liegen die Enden der Halteelemente 16 an dem Trägerteil 5 im Bereich der lichten Breite A der Öffnung 10 auf. Damit ist der Abstand zwischen den Enden der Halteelemente 16 kleiner als in der Vormontagestellung der Halteelemente 16. Beim weiteren Einführen der Vorrichtung 1 in den Innenraum 17 können sich die beiden Klemmbacken 26 aufgrund der elastischen Vorspannung mit den Drahtfedern 34 als elastische Elemente 8 aufgrund der Anbindung mit dem Gelenk 27 an dem Steg 14 entgegen der oben beschriebenen Richtung verschwenken, so dass aufgrund sich die Halteelemente 16 in die Hintergreifstellung gemäß Fig. 1 und 3 bewegen oder schnappen. Es kommt somit zu einer Rückverformung der Halteelemente 16 von der Eingreifstellung in die Hintergreifstellung gemäß Fig. 1 und 3.

In der Hintergreifstellung der Halteelemente 16 gemäß Fig. 1 und 3 liegen die Halteelemente 16 mit Kontaktflächen 30 auf dem Rand 9 an der Tragschiene 6, insbesondere der Innenkontur 18 des Trägerteils 5 bzw. der Montageschiene 7, auf. Dadurch wird eine form- und/oder kraftschlüssige Verbindung zwischen der Vorrichtung 1 und dem Trägerteil 5 hergestellt. Es handelt sich um eine Verbindung mit einem Keil- bzw. Exzentereffekt. Die Kontaktflächen 30 der Klemmbacken 26 sind gekrümmt im Wesentlichen als Kontaktflächen-Kreisbögen 31 ausgebildet (Fig. 7). Auch der Rand 9 der Tragschiene 6, auf welchem die Klemmbacken 26 aufliegen, sind gekrümmt im Wesentlichen als Rand-Kreisbögen 32 ausgebildet. Die Kontaktflächen-Kreisbögen 31 und die Rand-Kreisbögen 32 sind jeweils mit Zähnen 33 versehen. Es können auch nur die Kontaktflächen-Kreisbögen 31 oder nur die Rand-Kreisbögen 32 mit Zähnen 33 versehen sein oder die Kontaktflächen-Kreisbögen 31 und die Rand-Kreisbögen 32 nicht mit Zähnen 33 versehen sein, d. h. glatt ausgebildet sein (nicht dargestellt). Der Mittelpunkt des Rand-Kreisbogens 32 liegt für den in Fig. 7 dargestellten Klemmbacken 7 rechts und oberhalb der Drehachse 25 des Klemmbackens 26. In Fig. 7 ist ein Kreisbogen 38 mit Mittelpunkt Drehachse 25 und ein Kreisbogen 41 zu dem Rand-Kreisbogen 32 dargestellt. Bei einer Schwenkbewegung als Klemmbewegung des Klemmbackens 26 um die Drehachse 25 im Uhrzeigersinn wird somit der Raum zwischen der Klemmbacke 26 und dem Rand 9 kleiner und umgekehrt. Damit ist die Verbindung zwischen der Vorrichtung 1 und dem Trägerteil 5 selbstnachspannend aufgrund der auf die Klemmbacken 26 mit den Drahtfedern 34 wirkenden Vorspannung. Der Mittelpunkt des Kontaktflächen-Kreisbogens 31 liegt ebenfalls rechts und oberhalb der Drehachse 25, jedoch in Bezug auf den Mittelpunkt des Rand-Kreisbogens 32 weiter rechts und oben. Damit nähert sich der Kontaktflächen-Kreisbogen 31 der Klemmbacke 26 bei der oben beschriebenen Schwenkbewegung der Klemmbacke 26 dem Rand 9 der Tragschiene 6 an. In Fig. 7 ist auch ein Kreisbogen 40 der Kontaktfläche 30 des Klemmbackens 26 eingezeichnet. Dies gilt auch analog für die in Fig. 7 nicht dargestellte zweite Klemmbacke 26.

Bei der Montage der Vorrichtung 1 auf dem Trägerteil 5 kann die Vorrichtung 1 zunächst auf die Tragschiene 6 aufgelegt werden. Der Abstand zwischen den Halteelementen 16 an den Enden ist größer als die lichte Breite A der Öffnung 10. Zum Bewegen der Vorrichtung 1 von dem Vormontagezustand gemäß Fig. 2 zu der Eingreifstellung (nicht dargestellt) ist aufgrund der erforderlichen elastischen Verformung der Drahtfedern 34 eine zusätzliche Kraft nach unten auf die Vorrichtung 1 aufzubringen, um die elastischen Kräfte der Drahtfedern 34 zu überwinden. Das Gewicht der Vorrichtung 1 und des Anbauteiles 2 reicht hierzu nicht aus. Dadurch ist es möglich, die Vorrichtung 1 mit dem Anbauteil 3 vor dem Eindrücken des Vorsprunges 15 in die Öffnung 10 zur Erlangung der Hintergreifstellung die Vorrichtung 1 und das Anbauteil 2 auf der Montageschiene 7 in einer Richtung senkrecht zu der Zeichenebene der Fig. 2 und 3 zu bewegen. Damit können bei der Montage beispielsweise von Fotovoltaik-Modulen 4 diese zunächst auf der Montageschiene 7 ausgerichtet werden, d. h. senkrecht zu der Zeichenebene von Fig. 2 und 3 bewegt werden, und erst bei der Erlangung der endgültigen Montagestellung der Fotovoltaik-Module 4 können durch ein zusätzliches Eindrücken und Aufbringen einer Kraft nach unten gemäß der Darstellung in Fig. 2 die Fotovoltaik-Module 4 endgültig an der Montageschiene 7 befestigt werden durch Überführen der Vorrichtung 1 in den Endmontagezustand gemäß Fig. 1 und 3.

In Fig. 6 ist ein zweites Ausführungsbeispiel der Drahtfeder 34 dargestellt. Diese Drahtfeder 34 wird nicht an zwei gegenüberliegenden Enden der gleichen Klemmbacke 26 in die Bohrung 37 mit dem Endabschnitt 39 eingeschoben, sondern an zwei verschiedenen Klemmbacken 26 jeweils mit dem Endabschnitt 39 in die Bohrung 37 eingeführt. Dabei sind vorzugsweise an zwei Enden der beiden Klemmbacken 26 eine erste Drahtfeder 34 angeordnet und an zwei gegenüberliegenden Enden der beiden Klemmbacken 26 eine zweite Drahtfeder 34 befestigt (nicht dargestellt). Mit den beiden Drahtfedern 34 in dem zweiten Ausführungsbeispiel ist die Verbindung zwischen der Vorrichtung 1 und der Montageschiene 7 unlösbar, weil die beiden Drahtfedern 34 innerhalb des Innenraumes 17 der Montageschiene 7 angeordnet und von der Trägerplatte 13 abgedeckt sind, so dass die beiden Drahtfedern 34 von außen nicht zugänglich sind und somit nicht entfernt bzw. gelöst werden können.

Insgesamt betrachtet sind mit der erfindungsgemäßen Vorrichtung 1 und dem erfindungsgemäßen System 2 wesentliche Vorteile verbunden. Das Befestigen von Anbauteilen 3 an Trägerteilen 5 erfolgt in konstruktiv einfacher Weise. Dadurch können Kosten bei der Herstellung der Vorrichtung 1 und des Systems 2 eingespart werden und aufgrund der fehlenden Vorspannung der Halteelemente 16 in der Vormontagestellung tritt keine unbeabsichtigte Bewegung der Halteelemente 16 auf. Im Vormontagezustand treten somit an der Vorrichtung 1 bei geringen auf die Vorrichtung 1 einwirkenden Kräften keine Schäden an der Vorrichtung 1 bzw. dem System 2 auf.

## Patentansprüche

1. Vorrichtung (1) zum Befestigen eines Anbauteiles (3) an einem Trägerteil (5), umfassend
- wenigstens ein bewegbares Halteelement (16), welches oder welche beim Einführen in eine Öffnung (10) des Trägerteiles (5) aufgrund eines Kontaktes zwischen dem wenigstens einen Halteelement (16) und dem Trägerteil (5) in eine Eingreifstellung bewegbar ist zum Einführen in die Öffnung (10) und mittels einer Rückbewegung des wenigstens einen Halteelementes (16) nach dem Einführen in die Öffnung (10) in eine Hintergreifstellung bewegbar ist, so dass wenigstens ein Rand (9) des Trägerteils (5) von dem wenigstens einen Halteelement (16) hintergreifbar ist für eine formschlüssige Verbindung zwischen dem wenigstens einen Halteelement (16) und dem Trägerteil (5),
- wenigstens ein Mittel (12) zur Fixierung des Anbauteiles (3) an der Vorrichtung (1),
**dadurch gekennzeichnet, dass**
das wenigstens eine Halteelement (16) mittels wenigstens einen elastischen Elementes (8) von der Eingreifstellung in die Hintergreifstellung bewegbar ist.

2. Vorrichtung nach Anspruch 1,
**dadurch gekennzeichnet, dass**
das wenigstens eine Halteelement (16) und das wenigstens eine elastische Element (8) getrennte Bauteile sind.

3. Vorrichtung nach Anspruch 1 oder 2,
**dadurch gekennzeichnet, dass**
die Vorrichtung (1) wenigstens zwei Halteelemente (16) umfasst und/oder
das wenigstens eine Halteelement (16) in der Hintergreifstellung wenigstens teilweise, insbesondere vollständig, in einem von dem Trägerteil (5) eingeschlossenen Innenraum (17) angeordnet ist und/oder
je zwei Halteelemente (16) gegenüberliegend angeordnet sind und/oder
eine kraftschlüssige Verbindung zwischen dem wenigstens einen Halteelement (16) und dem Trägerteil (5) herstellbar ist.

4. Vorrichtung nach einem oder mehreren der vorhergehenden Ansprüche,
**dadurch gekennzeichnet, dass**
das wenigstens eine Mittel (12) eine Trägerplatte (13) zur, vorzugsweise unmittelbaren, Fixierung der Vorrichtung (1) an dem Anbauteil (3) umfasst.

5. Vorrichtung nach einem oder mehreren der vorhergehenden Ansprüche,
**dadurch gekennzeichnet, dass**
das wenigsten eine Halteelement (16) eine, vorzugsweise um eine Drehachse (25) verschwenkbar, Klemmbacke (26) ist.

6. Vorrichtung nach einem oder mehreren der vorhergehenden Ansprüche,
**dadurch gekennzeichnet, dass**
die Vorrichtung (1) einen in die Öffnung (10) einführbaren Steg (14) umfasst und an dem Steg (14) das wenigstens eine Halteelement (16), vorzugsweise mittels eines Gelenkes (27), verschwenkbar gelagert ist.

7. Vorrichtung nach Anspruch 6,
**dadurch gekennzeichnet, dass**
der Steg (14) an der Trägerplatte (13), vorzugsweise einstückig, ausgebildet ist
und/oder
eine von dem Steg (14) aufgespannte Ebene im Wesentlichen senkrecht zu einer von der Trägerplatte (13) aufgespannten Ebene steht.

8. Vorrichtung nach einem oder mehreren der vorhergehenden Ansprüche,
**dadurch gekennzeichnet, dass**
eine Kontaktfläche (30) des wenigstens einen Halteelementes (16) an dem Trägerteil (5) gekrümmt, insbesondere in einem Schnitt senkrecht zu der Drehachse (25) des wenigstens einen Halteelements (16) im Wesentlichen als ein Kontaktflächen-Kreisbogen (31), ausgebildet ist.

9. Vorrichtung nach einem oder mehreren der vorhergehenden Ansprüche,
**dadurch gekennzeichnet, dass**
der wenigstens eine von dem wenigstens einen Trägerteil (5) hintergreifbare Rand (9) des Trägerteils (5) gekrümmt, insbesondere in einem Schnitt senkrecht zu einer Drehachse (25) des wenigstens einen Halteelementes (16) im Wesentlichen als ein Rand-Kreisbogen (32), ausgebildet ist.

10. Vorrichtung nach einem oder mehreren der vorhergehenden Ansprüche,
**dadurch gekennzeichnet, dass**
der Mittelpunkt des Kontaktflächen-Kreisbogens (31) und/oder der Mittelpunkt des Rand-Kreisbogens (32) und/oder die Drehachse (25) des wenigstens einen Halteelementes (16) dahingehend zueinander ausgerichtet sind, dass sich bei einer Klemmbewegung des wenigstens einen Halteelementes (16) der Abstand zwischen dem Rand (9) des Trägerteiles (5) und der Kontaktfläche (30, 31) des wenigstens einen Halteelementes (16) verringert und/oder
das wenigstens eine elastische Elemente (8) als Feder (15), insbesondere Drahtfeder (34), ausgebildet ist.

11. System (2) zum Befestigen eines Anbauteiles (3, 4) an einem
Trägerteil (5), umfassend
- eine Vorrichtung (1) zum Befestigen des Anbauteiles (3, 4) an dem Trägerteil (5), umfassend wenigstens ein Halteelement (16) zum Einführen in eine Öffnung (10) des Trägerteiles (5) und zum Hintergreifen wenigstens eines Randes (9) des Trägerteiles (5) mit wenigstens einem bewegbaren Halteelement (16), welches oder welche beim Einführen in die Öffnung (10) aufgrund eines Kontaktes zwischen dem wenigstens einen Halteelement (16) und dem Trägerteil (5) in eine Eingreifstellung bewegbar ist zum Einführen in die Öffnung (10) und mittels einer Rückbewegung des wenigstens einen Halteelementes (16) nach dem Einführen in die Öffnung (10) in eine Hintergreifstellung bewegbar ist, so dass der wenigstens eine Rand (9) des Trägerteils (5) von dem wenigstens einen Halteelement (16) hintergreifbar ist für eine formschlüssige Verbindung zwischen dem wenigstens einen Halteelement (16) und dem Trägerteil (5), wenigstens ein Mittel (12) zur Fixierung des Anbauteiles (3, 4) an der Vorrichtung (1),
- das Trägerteil (5),
**dadurch gekennzeichnet, dass**
die Vorrichtung (1) gemäß einem oder mehrerer der vorhergehenden Ansprüche ausgebildet ist.

12. System nach Anspruch 11,
**dadurch gekennzeichnet, dass**
das Trägerteil (5) eine Tragschiene (6) ist und/oder die Öffnung (10) eine Nut (11)
und/oder
die Öffnung (10) in einen von einer Innenkontur (18) des Trägerteils (5) begrenzten Innenraum (17) mündet, so dass der wenigstens eine Rand (9) zum Hintergreifen mit dem wenigstens einen Haltelement (16) von der Innenkontur (18) des Trägerteils (5) gebildet ist.

13. System nach Anspruch 12,
**dadurch gekennzeichnet, dass**
zwei gegenüberliegende Halteelemente (16) bei einer Befestigung der Vorrichtung (1) an dem Trägerteil (5) bezüglich einer durch eine zentrische Schienenlängsachse (19) der Tragschiene (6) verlaufenden Ebene (20) dahingehend ausgerichtet sind, dass die Ebene (20) durch die beiden Halteelemente (16) verläuft und die Ebene (20) von der zentrischen Schienenlängsachse (19) in eine erste Teilebene (21) und eine zweite Teilebene (22) unterteilt ist und ein erstes Halteelement (16, 23) von der ersten Teilebene (21) geschnitten ist und ein zweites Halteelement (16, 24) von der zweiten Teilebene (22) geschnitten ist.

14. System nach einem oder mehreren der Ansprüche 11 bis 13,
**dadurch gekennzeichnet, dass**
der Abstand von Enden zweier gegenüberliegender Halteelemente (16) in einer Abstandsrichtung vor dem Einführen in die Öffnung (10) größer ist als eine lichte Breite (A) der Öffnung (10) in der Abstandsrichtung, so dass beim Einführen der zwei gegenüberliegenden Haltelemente (16) die Halteelemente (16) wegen eines Kontaktes mit dem Trägerteil (5) bewegbar sind.

15. System nach einem oder mehreren der Ansprüche 11 bis 14,
**dadurch gekennzeichnet, dass**
bei einer Befestigung der Vorrichtung (1) an dem Trägerteil (5) das elastische Element (8) vorgespannt ist und damit eine Vorspannkraft auf das wenigstens eine Halteelement (16) aufbringbar ist, so dass aufgrund der Vorspannung von dem wenigstens einen Halteelement (16) eine Klemmbewegung ausführbar ist.
